# EUROPEAN PATENT APPLICATION

(11) **EP 1 716 912 A1**
(43) Date of publication of application: **02.11.2006**
(21) Application number: 05704075.0
(22) Date of filing: 25.01.2005
(51) Int. Cl.: B01D 53/68, B01J 3/00, B01J 19/08, B01J 19/12

(54) **METHOD AND APPARATUS FOR TREATING EXHAUST GAS**

(30) Priority: 29.01.2004 JP 2004020975
(71) Applicant: Taiyo Nippon Sanso Corporation, Shinagawa-ku, Tokyo 1428558 (JP); OHMI, Tadahiro, Sendai-shi, Miyagi 980-0813 (JP)
(72) Inventor: OHMI, Tadahiro, Sendai-shi, Miyagi 9800813 (JP); HASEGAWA, Hideharu, Taiyo Nippon Sanso Corporation, Tokyo 1428558 (JP); ISHIHARA, Yoshio, Taiyo Nippon Sanso Corporation, Tokyo 1428558 (JP); SUZUKI, Katsumasa, Taiyo Nippon Sanso Corporation, Tokyo 1428558 (JP)
(74) Representative: Smyth, Gyles Darren
(86) International application number: PCT/JP2005/000897
(87) International publication number: WO 2005/072852

(57) **Abstract**

In the exhaust gas treatment method of the present invention, exhaust gas in an excited state in semiconductor device production equipment is introduced into a plasma treatment unit of a treatment unit under reduced pressure, introduced into a reactor of a reaction removal unit while maintained in an excited state by plasma generated in the plasma treatment unit, and is reacted with a reaction remover composed of particulate calcium oxide filled into the reactor to remove harmful gas components in the exhaust gas. Exhaust gas may also be reacted with the reaction remover after having degraded the harmful gas components by oxidative degradation in the presence of plasma by supplying oxygen to the plasma treatment unit.

## Description

### TECHNICAL FIELD

The present invention relates to a method for treating exhaust gas and apparatus for treating exhaust gas to remove harmful gas components present in exhaust gas discharged from production equipment used in the production of semiconductor devices, flat panel display devices, solar cells or magnetic thin plates.

The present application claims priority of Japanese Patent Application No. 2004-20975, filed on January 29, 2004, the content of which is incorporated herein by reference.

### BACKGROUND ART

Exhaust gas discharged from the aforementioned production equipment contains Ar along with other reaction products such as CF₄, C₂F₆ and SiF₄. These reaction products contained in exhaust gas have a high global warming potential, and are not allowed to be discharged as is, but rather are required to undergo detoxification treatment prior to being discharged. In addition, high molecular weight reaction products are also formed by exposing the exhaust gas to atmospheric pressure prior to undergoing detoxification treatment, thereby resulting in, for example, SiF₄ forming a gel-like polymer solid due to conjugation with water molecules. Moreover, precursors of CF₄ form polymers due to collisions between gas molecules at atmospheric pressure. These solid reaction products cause clogging of exhaust lines.

Although there are cases in which Kr or Xe is used instead of Ar to compose exhaust gas, since these gases are noble gases, expensive and are contained in large amounts in the exhaust gas, they are recovered and reused.

It is necessary to preliminarily remove harmful gas components contained in the exhaust gas, such as CF₄, SiF₄ and other fluoride gases, in order to recover the Kr and Xe.

The invention disclosed in Japanese Unexamined Patent Application, First Publication No. H10-277354 is an example of the prior art for removing CF₄ and other fluoride gases contained in these nobles gases such as Kr and Xe.

The present invention removes trace amounts of impurity gases such as CF₄ contained in noble gases such as Kr and Xe extracted from cryogenic air separation devices, by allowing the treated gas to flow into a tube composed of a dielectric material, generating plasma at atmospheric pressure inside the tube to activate the treated gas and generate radicals or other active species, followed by contacting the treated gas in the active state with a reaction remover composed of an alkaline compound such as soda lime to react and remove CF₄ and other impurity gases.

However, in this invention, since a treated gas in an active state is activated with plasma at atmospheric pressure, a large amount of energy is required to put fluoride gases and other impurity gases into an excited state, and a high-output plasma device is required. In addition, there is also the problem of requiring a high-output plasma device for generating plasma at atmospheric pressure.

In addition, in the case of applying the treatment method of this invention of the prior art to exhaust gas discharged from the aforementioned semiconductor production device, although the exhaust gas discharged from the semiconductor production device is already in excited state, since it is exposed to atmospheric pressure, it becomes stable due to an increase in the number of collisions between molecules, thereby resulting in the need to again excite this stable gas with plasma. Consequently, the amount of energy required for excitation increases further. Moreover, additional plasma energy is required to decompose this solid reaction product having greater stability.
[Patent Document 1] Japanese Unexamined Patent Application, First Publication No. H10-277354

### DISCLOSURE OF THE INVENTION

Accordingly, an object of the present invention is to provide an exhaust gas treatment method and exhaust gas treatment apparatus capable of removing harmful gas components with a low amount of energy but without causing accumulation of solid reaction products when removing harmful gas components such as hydrides, halides, and particularly fluorides, of elements, the oxides of which are solids, present in exhaust gas discharged from production equipment used in the production of semiconductor devices, flat panel displays, solar cells or magnetic thin plates.

In order to achieve the aforementioned object, a first aspect of the present invention is an exhaust gas treatment method for treating exhaust gas containing at least one harmful gas component selected from the group consisting of organometallic gas, metal hydride gas and halide gas; wherein, at least a portion of the exhaust gas is made in an excited state, and is reacted with a reaction remover containing a calcium compound under reduced pressure.

In the aforementioned exhaust gas treatment method, the exhaust gas may be reacted with the reaction remover in the presence of oxygen.

In the aforementioned exhaust gas treatment method, the exhaust gas may be reacted with a reaction remover in the form of a viscous flow.

In the aforementioned exhaust gas treatment method, at least a portion of the exhaust gas can be put into the excited state by plasma and/or ultraviolet light.

In the aforementioned exhaust gas treatment method, the exhaust gas preferably contains xenon and/or krypton.

In the aforementioned exhaust gas treatment method, the reaction remover preferably contains calcium oxide and/or calcium hydroxide.

In the aforementioned exhaust gas treatment method, the harmful gas component is a hydride or halide of an element oxide of which is a solid.

A second aspect of the present invention is an exhaust gas treatment apparatus for treating exhaust gas containing at least one harmful gas component selected from the group consisting of organometallic gas, metal hydride gas and halide gas, comprising: a first exhaust pump for reducing the pressure of the exhaust gas, a second exhaust pump for reducing the pressure of the exhaust gas, an excitation unit arranged between the first exhaust pump and the second exhaust pump for putting the exhaust gas into an excited state, and a reaction removal unit containing a reaction remover for removing the harmful gas component by reacting with the harmful gas component present in exhaust gas discharged from the excitation unit.

In the aforementioned exhaust gas treatment apparatus, an oxygen supply unit for supplying oxygen may be arranged in the excitation unit.

In the aforementioned exhaust gas treatment apparatus, an example of the excitation unit can be that composed of a plasma device and/or an ultraviolet radiation device.

In the aforementioned exhaust gas treatment apparatus, an example of the reaction remover can be that composed of calcium oxide and/or calcium hydroxide.

Since exhaust gas from the aforementioned production equipment is introduced into this device under reduced pressure, there is no formation of solid reaction products which cause clogging of the lines. In addition, since at least a portion of the exhaust gas is already in an excited state when the exhaust gas is introduced into this device, and is led into the reaction removal unit while maintained in the excited state, in addition to the reaction proceeding efficiently, less energy is required to maintain the excited state.

In addition, in the case of having added oxygen to the exhaust gas in an excited state, since harmful gas components are decomposed by this oxygen, and the decomposition products react with the reaction remover, numerous types of harmful gas components can be reacted and removed.

Moreover, since the exhaust gas is made to flow in the form of a viscous flow during flow of the exhaust gas under reduced pressure, pressure loss can be reduced, and gas components in an excited state can be transported to the plasma device through comparatively narrow lines. Thus, the amount of space required for the lines from the first exhaust pump of the production equipment to the plasma device can be decreased. Allowing the exhaust gas to flow in the form of viscous flow under reduced pressure means that the flow rate of the exhaust gas through the lines can be increased even for the same Reynolds number. Consequently, gas components in an excited state are able to reach the plasma device in a comparatively short period of time, thereby making it possible to prevent deactivation. Moreover, since exhaust gas is allowed to flow in the form of viscous flow, although collisions between excited gas molecules occur frequently, since energy transfer mainly occurs between the excited gas molecules, the excited state of the exhaust gas components is maintained. In addition, even in the case of maintaining an excited state in the plasma device, plasma is generated easily by gas components in the excited state formed with the production equipment, thereby making it possible to conserve on energy required for plasma generation.

In addition, in the case the activation energy of Xe or Kr in the exhaust gas is low while easily excited gas components are contained, plasma is generated easily as a result of this as well. In addition, if calcium oxide, calcium hydroxide or a mixture of calcium oxide and calcium hydroxide is used for the reaction remover, since the substance itself is inexpensive, it can be converted into stable, harmless CaF₂, for example, after reaction and removal, and this can then be reused as a raw material of hydrogen fluoride.

### BRIEF DESCRIPTION OF THE DRAWINGS

FIG. 1 is a schematic block diagram showing an example of a treatment apparatus of the present invention;
FIG. 2 is a diagram showing the experimental results in a specific example; and
FIG. 3 is a FT-IR measurement chart of CO, C₃F₈, C₂F₆ and CF₄ present in gas following exhaust gas treatment for a composition not containing Xe.

### BEST MODE FOR CARRYING OUT THE INVENTION

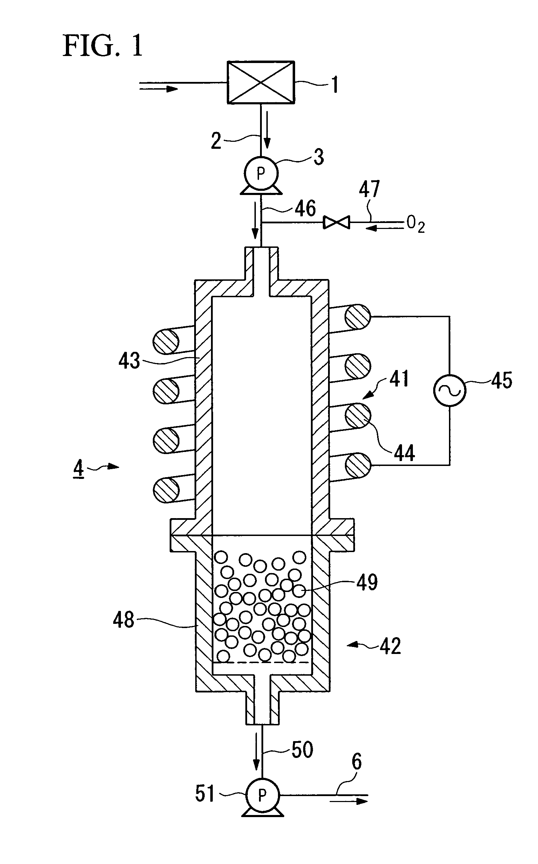

Fig. 1 shows an example of an exhaust gas treatment apparatus of the present invention.

In the figure, reference symbol 1 indicates equipment for producing a semiconductor device such as a reactive plasma etching device. Exhaust gas is suctioned from this semiconductor device production equipment 1 by a booster pump (first pump) 3 through a line 2, reduced to a pressure of 200 to 1 Torr, and preferably 50 to 5 Torr, after which it is introduced into a treatment unit 4. Furthermore, although a booster pump is indicated as an example of the first pump here, it is not limited thereto.

Treatment unit 4 is composed of a plasma treatment unit 41 and a reaction removal unit 42.

Plasma treatment unit 41 is composed of a cylindrical treatment tube 43 made of alumina and the like, a high-frequency coil 44 wound around the outside of this treatment tube 43, an alternating current power supply 45, which supplies high-frequency current at 1 MHz to 100 MHz to this high-frequency coil 44, and a feed line 46, one end of which is connected to the end of treatment tube 43, while the other end is connected to the exhaust side of booster pump 3.

Gas inside treatment tube 43 is put into a plasma state (excited state) as a result of supplying high-frequency current to high-frequency coil 44 from alternating current power supply 45. Examples of the type of plasma include, but are not limited to, inductively coupled plasma.

Plasma treatment unit 41 of the exhaust gas treatment apparatus of the present invention is composed so that 0.02 to 30 ppm of the molecules in the exhaust gas are put into an excited state.

If the proportion of molecules in an excited state is below the lower limit of the aforementioned range, it becomes no longer possible to maintain the excited state of the exhaust gas, thereby resulting in the risk of it being difficult to effectively react and remove harmful gas components. If the aforementioned proportion exceeds the upper limit of the aforementioned range, the temperature of the plasma treatment unit and the temperature on the downstream side thereof rise due to the excitation energy of the exhaust gas, thereby making it necessary to install a separate cooling mechanism in order to cool the plasma treatment apparatus and downstream lines.

In addition, an oxygen supply line 47 is connected to the feed line 46 through a valve, and this oxygen supply line 47 is connected to an oxygen supply source not shown, enabling it to supply oxygen to treatment tube 43.

In addition, gas molecules in an excited state are preferably given corrosion resistance by carrying out passivation treatment on the inner surface of the line extending from the exhaust side of booster pump 3 through feed line 46 to cylindrical treatment tube 43, and fluoride passivation treatment or aluminum oxide passivation treatment is preferred. Moreover, if the line is heated in order to shorten the residence time of gas molecules on the inner surface of this line, gas molecules can be efficiently led to plasma treatment unit 41 while maintained in an excited state. This heating temperature is preferably 150°C or lower. If the heating temperature exceeds 150°C, there is the risk of gas molecules dissociating and accumulating due to the heat energy introduced from the line.

Reaction removal unit 42 has a cylindrical reactor 48 made of stainless steel, quartz or alumina and the like, and is filled therein with a reaction remover 49 composed of calcium oxide, calcium hydroxide or a mixture of calcium oxide and calcium hydroxide.

This calcium oxide, calcium hydroxide or mixture of calcium oxide and calcium hydroxide comprising reaction remover 49 is preferably granular or particulate in form, and the grain diameter is preferably within the range of 0.5 to 10 mm. If the grain diameter is less than 0.5 mm, since the filling rate reaches 70% or more, the smooth flow of exhaust gas is obstructed. As a result, there is the risk of an increase in pressure loss. If the grain diameter exceeds 10 mm, although the smooth flow of exhaust gas is not obstructed, the time until the exhaust gas reaches the diffusion of fine pores within the reaction remover becomes longer, thereby resulting in the risk of a decrease in reaction efficiency.

In addition, the calcium oxide used is preferably that in which fine voids have been formed inside by baking particulate calcium carbonate or that formed by tablet pressing in an oxidizing atmosphere followed by removal of carbon dioxide, or that in which fine voids have been formed inside by dehydrating particulate or granular calcium hydroxide or calcium hydroxide formed by tablet pressing. In addition, the calcium hydroxide used is preferably that which has been formed by tablet pressing or that which has been molded using a thickener for the core. At this time, the specific surface area of the calcium oxide or calcium hydroxide is preferably 1 m²/g or more. This specific surface area refers to the BET specific surface area. If the specific surface area is less than 1 m²/g, since reaction with F compound occurs primarily in the vicinity of the surface, there is the risk of the reaction efficiency decreasing to less than 1%.

Furthermore, the void fraction of these reaction agents is preferably 10 to 50%, and the abundance ratio of the calcium hydroxide is preferably 20 to 70%. If the void fraction is below the lower limit of the aforementioned range, specific surface area decreases considerably, and the entrance of harmful gas molecules by diffusion into the grain space is inhibited, thereby resulting in the risk of a decrease in the reaction efficiency of the agent. If the void fraction exceeds the upper limit of the aforementioned range, bonding among secondary grains that compose the agent becomes weak, thereby resulting in the risk of increased susceptibility to dust emission.

In addition, if the abundance ratio of calcium hydroxide is below the lower limit of the aforementioned range, the average molar volume of the Ca agent (mixture of CaO and Ca (OH)₂) becomes nearly equal to the molar volume of the CaF₂ formed, and since stress due to reaction on the surface is not generated, it becomes difficult for microcracks to form, thereby resulting in the risk of a decrease in reaction efficiency. In addition, calcium oxide agents containing less than 20% of Ca(OH)₂ are classified as hazardous substances in the Fire Service Law. On the other hand, if the abundance ratio of calcium hydroxide exceeds the upper limit of the aforementioned range, the Ca agent is susceptible to dust formation, thereby resulting in not only a considerable decrease in reaction efficiency, but also resulting in the generation of a large amount of water due to reaction with the F compound, thereby resulting in the risk of the need to provide a moisture removal device in a subsequent stage.

A portion of this calcium oxide on the surface thereof changes to calcium hydroxide due to the presence of water in the air, and this calcium hydroxide actually contributes to the reaction. Although methods for forming calcium hydroxide on the surface of calcium oxide include allowing the calcium oxide to stand in air for a predetermined amount of time, and allowing the calcium oxide to stand in an atmosphere in which the moisture concentration is controlled, any method may be employed provided calcium hydroxide is formed on the surface of calcium oxide.

In addition, although this reaction agent is filled into reactor 48, reactor 48 is set so that the SV value is 1000 to 5000 Hr⁻¹ and the LV value is 2 m/min or more based on the amount of exhaust gas treated so as not to inhibit the distribution of exhaust gas.

If the SV value is below the lower limit of the aforementioned range, the volume of the reaction vessel becomes excessively large, which not only contributes to increase device costs, but also results in the risk of considerable bother during transport. If the SV value exceeds the upper limit of the aforementioned range, the effective passage speed of the exhaust gas increases, resulting in an increase in the masstransfer zone length of the agent, which together with causing a decrease in the utilization efficiency of the agent, also results in the risk of increased pressure loss.

In addition, if the LV value is less than 2 m/min, pressure loss decreases, the masstransfer zone length decreases and the utilization efficiency of the agent can be increased, it is necessary to increase the aperture of the vessel, thereby resulting in the risk of increased device installation area and increased device costs.

Moreover, a filter is attached to the bottom of reactor 48 for preventing the leakage of reaction agent.

In addition, reactor 48 is removably attached to treatment tube 43 of plasma treatment unit 41 by a flange and the like, enabling reaction remover 49 inside to be replaced as necessary.

Moreover, one end of a discharge line 50 is connected to the bottom of reactor 48, the other end is connected to the intake side of a back pump 51, and the inside of treatment unit 4 is reduced in pressure by this back pump 51.

A line 6 is connected to the exhaust side of back pump 51, and exhaust gas from which harmful gas components have been removed is discharged into the atmosphere through a duct and the like.

In addition, in the case noble gas is contained in the exhaust gas, the exhaust gas is sent to a noble gas recovery and purification device not shown. A purification device using, for example, pressure swing adsorption is used in this noble gas recovery and purification device.

Next, an explanation is provided of a method for removing harmful gas components contained in exhaust gas discharged from the aforementioned production equipment using this treatment apparatus.

Process gas in the form of, for example, Ar, C₂F₆, C₄F₈ or C₅F₈ gas is introduced into semiconductor device production equipment 1, while exhaust gas in the form of gas containing, for example, Ar, CF ions, CF₂ ions, CF₃ ions, COF₂, CF₄, HF, C₂F₆ or other higher structure of fluorocarbon gases and SiF₄, is sent from semiconductor device production equipment 1 to booster pump 3 through line 2. The fluoride ions, radicals and gases such as CF ions, CF₂ ions, CF₃ ions, COF₂, CF₄, HF, C₂F₆ and other higher structure of fluorocarbon gases and SiF₄ are the harmful components to be removed.

However, depending on the semiconductor device production equipment 1, other harmful components such as GeH₄, B₂H₆, AsH₃, PH₃, SiHCl₂ and degradation products thereof may also be contained, and in such cases, these gases are also harmful gas components to be removed. Although varying according to the type of semiconductor device production equipment 1, the total amount of such harmful components contained in the exhaust gas is about 0.1 to 25% in terms of the volumetric ratio.

In addition, each gas component contained in the exhaust gas is in an excited state as a result of being subjected to plasma or heating within semiconductor device production equipment 1, and are present in the form of radicals and other active species.

Exhaust gas from booster pump 3 is introduced into treatment tube 43 of plasma treatment unit 41 through feed line 46 under reduced pressure. Within treatment tube 43, high-frequency current from alternating current power supply 45 is supplied to high-frequency coil 44 resulting in the generation of plasma. Each gas component in the exhaust gas introduced into treatment tube 43 is continuously maintained in an excited state by this plasma.

In addition, since the pressure throughout treatment unit 4 is in a reduced state of 200 to 1 Torr, gas flowing into treatment tube 43 is in a state which facilitates generation of plasma, thereby enabling plasma to be generated at a low level of applied electrical power.

Exhaust gas maintained in this excited state is sent to reaction removal unit 42 by the exhaust of back pump 51 where it reacts with reaction remover 49 composed of calcium oxide, resulting in removal of harmful components from the exhaust gas. Although examples of the chemical reactions at this time are indicated below, since the substance that contributes to the actual reaction as previously described is calcium hydroxide on the surface of particulate calcium oxide, tablet-pressed or molded calcium hydroxide, or calcium hydroxide in a mixture of calcium oxide and calcium hydroxide, the reaction is with calcium hydroxide. Furthermore, the moisture required for the calcium hydroxide formed on the surface of particulate calcium oxide is re-released during the formation of calcium fluoride as shown in the formulas, and is then reused for the hydroxylation reaction of calcium oxide. Thus, if the abundance ratio of calcium hydroxide in the calcium oxide exceeds 70% by weight, since the moisture released during the formation of calcium fluoride is discharged in a later stage, in the case of, for example, installing a noble gas recovery and purification device in a later stage, it is necessary to install a moisture removal device between the reactor and the aforementioned noble gas removal and purification device.

2CaO + 2H₂O → 2Ca (OH)₂

CF₄ + 2Ca (OH)₂ → 2CaF₂ + CO₂ + 2H₂O

SiF₄ + O₂ + 2Ca (OH)₂ → 2CaF₂ + SiO₂ + 2H₂O

Namely, fluorides, which are the main component of harmful gas components, are solidified as calcium fluoride (quartzite) .

On the other hand, when the harmful components consist of oxides, and in the case of hydroxides of elements that become solids such as PH₃ or B₂H₆, these harmful components are removed according to the chemical reactions indicated below.

2PH₃ + 3Ca(OH)₂ + 4O₂ → Ca₃(PO₄)₂ + 6H₂O

3B₂H₆ + 2Ca(OH)₂ + 9O₂ → Ca₂B₆O₁₁ + 11H₂O

Namely, in the case of PH₃, the reaction product is calcium phosphate and calcium phosphate is the main component of phosphorous mineral. Similarly in the case of B₂H₆, the reaction product is a component of a mineral. As has been described above, the harmful component is solidified in the form of a mineral.

In addition, in the case of SiH2Cl2, which is a type of chloride, this harmful component is removed according to the chemical reaction indicated below.

SiH₂Cl₂ + Ca (OH)₂ → CaCl₂ + SiO₂ + 2H₂O

Exhaust gas from which harmful gas components have been removed are discharged into the atmosphere from line 6 by means of back pump 51 through a duct and so forth. In addition, in the case noble gas is contained in the exhaust gas, the exhaust gas is send from line 6 to a noble gas recovery and purification device by means of back pump 51 where noble gas such as Kr or Xe is recovered and reused.

The removal reaction capacity of reaction remover 49 within reaction removal unit 42 decreases as the removal reaction progresses. Consequently, in the case the removal reaction capacity of reaction remover 49 is nearly lost, it is replaced with a reaction removal unit filled with a fresh reaction remover 49. In addition, in the case of installing two or more treatment units 4 in parallel, and the removal reaction capacity of reaction remover 49 of one treatment unit 4 has decreased, continuous operation is possible by switching over to another treatment unit 4.

In addition, another treatment method consists of feeding oxygen from oxygen supply line 47 through feed line 46 into treatment tube 43 of plasma treatment unit 41 of treatment unit 4, and using the oxygen to degrade harmful gas components by oxidative degradation while maintaining in a plasma state within treatment tube 43 in a plasma atmosphere.

In this treatment method, in the case harmful gas components are contained in the exhaust gas which react poorly with calcium oxide in the excited state, by subjecting these gas components to oxidative degradation with oxygen to convert to chemical species that react easily with calcium hydroxide, this type of harmful gas components can be reacted and removed.

Although the amount of oxygen introduced here is determined so as to be in excess based on the total amount of harmful gas components contained in the exhaust gas, if the amount introduced is excessively large, there is the risk of dissipation of the exhaust gas excited state, and should therefore be determined in consideration of this.

The specific amount of oxygen supplied is, for example, 1 to 3 equivalents as a general reference, and preferably 1 to 2 equivalents, based on the total amount of carbon and fluorine composing the harmful gas components.

If the amount of oxygen supplied is below the lower limit of the aforementioned range, in the case carbon is contained in the harmful components, carbon accumulates on the inner walls of the plasma treatment unit, causing changes over time in the plasma state, and resulting in the risk of being unable to obtain a stable excited state for the exhaust gas. If the amount of oxygen supplied exceeds the upper limit of the aforementioned range, in addition to the excited state of the plasma dissipating, there is the risk of metal oxides accumulating on the inner walls of the plasma treatment unit and downstream therefrom.

Examples of such harmful gas components include PH₃, SiH₄, B₂H₆, GeH₄, SF₆ and (CH₃)₃Ga.

In addition, even in the case of exhaust gas containing other harmful gas components such as CF₄, C₂F₈ or SiF₄, they may be contacted with calcium oxide after having introduced oxygen and subjected to oxidative degradation in plasma under reduced pressure.

In this treatment method, since exhaust gas in an excited state from semiconductor device production equipment 1 is reacted with reaction remover 49 composed of calcium oxide in reaction removal unit 42 while maintaining in an excited state with plasma in plasma treatment unit 41, the reaction between harmful gas components and calcium oxide proceeds efficiently, which together with enabling removal to be carried out satisfactorily, enables the amount of energy required to plasma generation to be reduced since is not necessary to return the stabilized solid substance or gas to an excited state. For example, in the case of treating exhaust gas at the rate of 1 liter/minute, although the amount of energy required to generate plasma according to the present invention is about 1.5 kW, the amount of energy required when degrading exhaust gas at the rate of 1 liter/minute by again generating plasma under reduced pressure after tentatively discharging at atmospheric pressure using the invention disclosed in Japanese Patent Unexamined Application, First Publication No. H10-277354 was 5.5 kW. Namely, use of the present invention makes it possible to reduce the amount of energy required for plasma generation to about 30% of that of the prior art.

In addition, since plasma is generated for gas under reduced pressure and in an excited state in treatment tube 43, plasma is generated easily and as a result, less energy is required for plasma generation, and there is also no need for a cooling means for cooling treatment tube 43.

Moreover, since the exhaust gas is made to flow in the state of a viscous flow when the exhaust gas flows under reduced pressure, the flow rate of the exhaust gas can be increased with reduced pressure loss. Namely, ions, radicals and non-degraded gas purified in semiconductor device production equipment 1 can be rapidly transported to reaction removal unit 42 through comparatively narrow lines. Moreover, since the likelihood of ions, radicals and other excited gas molecules colliding with the walls of the line is reduced as a result of high-speed transport of the gas having an increased flow rate, deactivation of excited gas molecules can be prevented, while also being able to prevent accumulation of solid reaction products on the inner surface of the lines. In addition, pressure loss attributable to the reaction agent can also be reduced.

For example, the pressure loss at an exhaust gas pressure of 30 Torr and superficial velocity in treatment tube 43 of 2 cm/sec was about 1 Torr. Moreover, since exhaust gas is allowed to flow while maintaining the gas in an excited state under reduced pressure, the formation of solid reaction products in space can also be inhibited. As described above, since gas components in an exited state can be transported to a plasma device through comparatively narrow lines, in addition to being able to the reduce the amount of space required for the lines to the first exhaust pump of the production equipment and the plasma device, the inner diameter of treatment tube 43 can be decreased, thereby making it possible to reduce the size of plasma treatment unit 41.

In addition, in the case a gas having a low activation energy which is easily excited in the manner of Xe or Kr being contained in the exhaust gas, plasma can be generated by these with only a small amount of energy. In addition, in the case of applying the same energy in the state in which easily excited Xe or Kr is contained in the gas, the applied energy can also be used for degradation of dissociating gas in addition to generation of plasma, thereby making it possible to, for example, accelerate degradation of higher fluorocarbons.

In addition, since reaction remover 49 becomes a chemically stable and harmless compound such as CaF₂ following reaction, it can be handled easily when replacing a used reaction agent. Moreover, it is not necessary to re-detoxify the used reaction agent, and it can be reused as a new chemical raw material.

Moreover, in a treatment method in which oxygen is introduced into plasma treatment unit 41 and harmful gas components are degraded by oxidative degradation in an excited state in the presence of plasma, even in the case of harmful gas components which have difficulty in reacting directly with calcium oxide, since these components are subjected to oxidative degradation and react with calcium oxide in an excited state, the removal reaction proceeds adequately enabling even exhaust gas containing such harmful gas components to be treated.

Furthermore, in the present invention, a heater may be arranged on the outside of treatment tube 43 instead of plasma treatment unit 41 of treatment unit 4, and exhaust gas within treatment tube 43 may be heated to a high temperature with this heater so as to maintain the excited state of the exhaust gas by heating. Alternatively, the excited state of the exhaust gas may be maintained with, for example, a plasma source having an electron temperature of about several tens to several eV such as ICP plasma or microwave plasma, or by irradiating with vacuum ultraviolet light.

The following provides a description of specific examples.

### Example 1

Exhaust gas from semiconductor device production equipment 1 was treated using the treatment apparatus shown in Fig. 1. An alumina cylindrical tube having an inner diameter of 40 mm was used for treatment tube 43 of plasma treatment unit 41, this was wound with a high-frequency coil 44, and a high-frequency current having a frequency of 4 MHz and maximum output of 1.2 kW was applied thereto from alternating current power supply 45 to generate inductively coupled plasma within treatment tube 43.

In addition, a bottomed cylinder made of quartz having an inner diameter of 40 mm and length of 150 mm was used for reactor 48 of reaction removal unit 42, and the inside thereof was filled with 300 g of particulate calcium oxide having a grain diameter of about 1 mm to a void fraction of 50% by volume.

Exhaust gas in an excited state was introduced from semiconductor device production equipment 1 into treatment tube 43 through feed line 46 by operating booster pump 3 and back pump 51. The exhaust gas at this time had a composition of 90% Ar, 2% COF₂, 3% SiF₄, 0.5% HF, 0.1% C₄F₄, 2% CF₄ and 2.4% C₂F₆. Plasma was generated in treatment tube 43 by setting the pressure in treatment unit 41 to 30 Torr, and the exhaust gas flow rate to 100 SCCM.

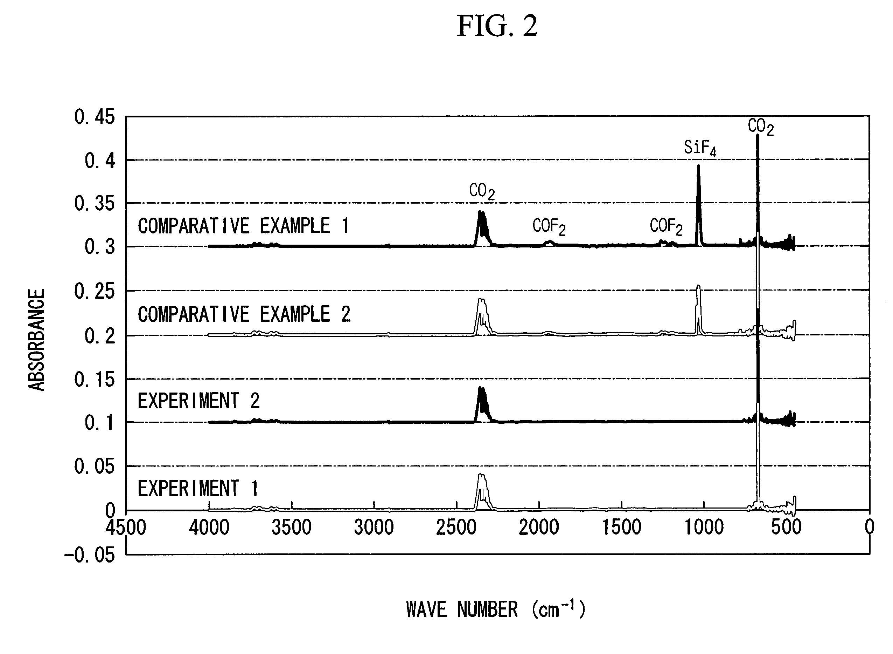

The results of Experiment 1 are shown in Fig. 2. Here, oxygen at 30 SCCM is continuously supplied from an oxygen supply line. As shown in the data of Experiment 1 (chart of Fig. 2), when the amounts of COF₂, SiF₄, HF, C₄F₄, CF₄ and C₂F₆ in the exhaust gas discharged from discharge line 50 were quantified by FT-IR, all of the gas components were below the detection limit (2 ppm) of FT-IR, and the reaction product was detected in the form of CO₂ at about 9%.

In Experiment 2, the amounts of harmful exhaust gas components were quantified by FT-IR in the same manner as Experiment 1 based on the same conditions as Experiment 1 with the exception of using an oxygen flow rate of 10 SCCM. As shown in the data of Experiment 2, when the amounts of COF₂, SiF₄, HF, C₄F₄, CF₄ and C₂F₆ in the exhaust gas discharged from discharge line 50 were quantified by FT-IR, all of the gas components were below the detection limit (2 ppm) of FT-IR, and the reaction product was detected in the form of CO₂ at about 9%.

For comparison purposes, an example carried out in the same manner as Experiment 1 under the same conditions with the exception of using an oxygen flow rate of 0 SCCM is shown in Comparative Example 1. In addition to the reaction product in the form of CO₂, COF₂ and SiF₄ were also detected. On the basis of these results, the removal capacity for COF₂ and SiF₄ was determined to improve in the case of supplying oxygen to treatment tube 43.

In addition, in Comparative Example 2, exhaust gas components were quantified by FT-IR in the same manner as Experiment 1 under the same conditions with the exception of using calcium carbonate instead of calcium oxide. As shown in the data for Comparative Example 2, when the amounts of COF₂, SiF₄, HF, C₄F₄, CF₄ and C₂F₆ in the exhaust gas discharged from discharge line 50 were quantified by FT-IR, COF₂ was detected at about 3 ppm and SiF₄ was detected at about 1%, while the reaction product in the form of CO₂ was detected at about 9%.

On the basis of these results, in comparison with the case of using calcium carbonate for the reaction remover, the use of calcium oxide was determined to improve the removal capacity for SiF₄.

### Example 2

Exhaust gas having a composition of 20% Ar, 78% Xe, 0.1% GeH₄, 0.1% B₂H₆ and 1.8% SiH₄ was introduced into treatment tube 43 at a pressure of 50 Torr and flow rate of 200 SCCM using the same treatment apparatus as Example 1. Simultaneous thereto, oxygen at normal pressure was introduced from oxygen supply line 47 into reaction tube 43 at a flow rate of 10 SCCM to generate plasma within treatment tube 43 and degrade the harmful gas components in the exhaust gas by oxidative degradation. Subsequently, the exhaust gas was contacted with calcium oxide to remove the harmful gas components in reaction removal unit 42 in the same manner as Example 1.

When the amounts of GeH₄, B₂H₆ and SiH₄ in the exhaust gas discharged from discharge line 50 were quantified, the amount of GeH₄ was less than 3 ppm (detection lower limit), the amount of B₂H₆ was less than 2 ppm (detection lower limit), and the amount of SiH₄ was less than 3 ppm (detection lower limit).

### Example 3

Exhaust gas from semiconductor device production equipment 1 was treated using the treatment apparatus shown in Fig. 1. An alumina cylindrical tube having an inner diameter of 40 mm was used for treatment tube 43 of plasma treatment unit 41, this was wound with a high-frequency coil 44, and a high-frequency current having a frequency of 2 MHz and maximum output of 1.5 kW was applied thereto from alternating current power supply 45 to generate inductively coupled plasma within treatment tube 43. In addition, a bottomed cylinder made of stainless steel having an inner diameter of 40 mm and length of 150 mm was used for reactor 48 of reaction removal unit 42, and the inside thereof was filled with 20 kg of particulate calcium oxide having a grain diameter of 3 mm to a void fraction of 50% by volume.

Exhaust gas in an excited state was introduced from semiconductor device production equipment 1 into treatment tube 43 through feed line 46 by operating booster pump 3 and back pump 51. The exhaust gas at this time contained harmful components consisting of 2% COF₂, 0.7% SiF₄, 0.1% HF, 0.2% C₄F₄ and 1% C₂F₆ and other higher structure of fluorocarbons, while the remainder consisted of plasma gas in the form of Ar and Xe. Furthermore, the ratio of Ar to Xe in the composition was 3:1. Plasma was generated in treatment tube 43 by setting the pressure in the treatment unit to 30 Torr, and the exhaust gas flow rate to 100 SCCM.

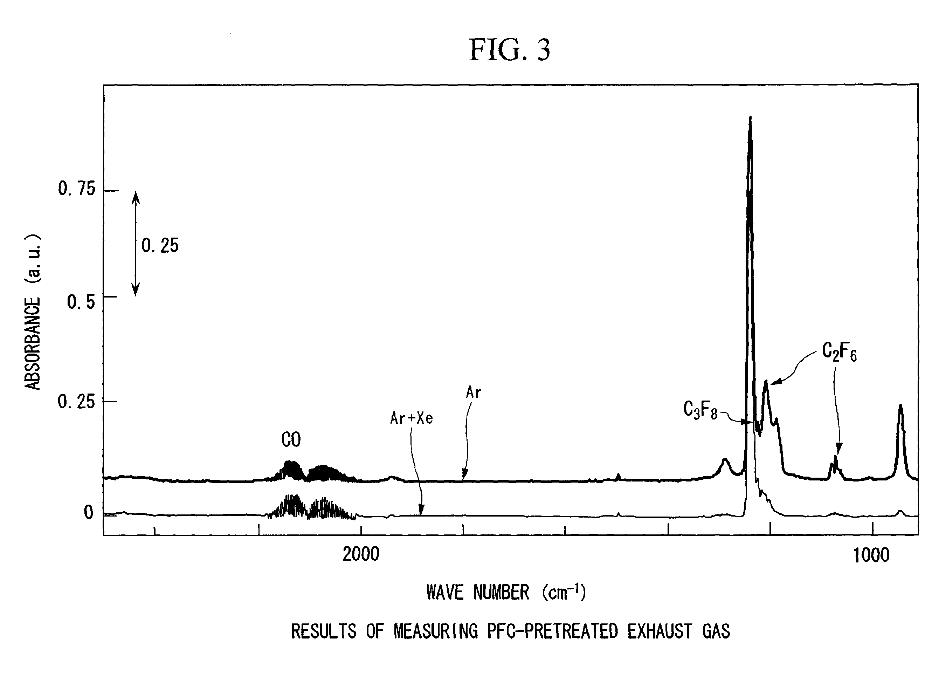

The results of Example 3, and the results of measuring by FT-IR the amounts of CO, C₃F₈, C₂F₆ and CF₄ in the gas following exhaust gas treatment for a composition not containing Xe used as a comparative example, are shown in Fig. 3.

In the case of treating exhaust gas containing Xe, absorption peaks were observed for CO and CF₄. On the other hand, the spectrum of the comparative example not containing Xe was such that the peak height of CF₄ was higher than in the case of containing Xe, and absorption peaks were observed for C₃F₈ and C₂F₆.

Namely, it was indicated from the figures that degradation of higher fluorocarbons was incomplete in the case of the comparative examples, and the presence of Xe or Kr in the exhaust gas was found to result in removal treatment proceeding more effectively.

### INDUSTRIAL APPLICABILITY

The present invention can be used in applications for removing harmful gas components from various types of exhaust gas discharged from semiconductor production devices.

## Claims

1. An exhaust gas treatment method for treating exhaust gas containing at least one harmful gas component selected from the group consisting of organometallic gas, metal hydride gas and halide gas; wherein, at least a portion of the exhaust gas is made in an excited state, and is reacted with a reaction remover containing a calcium compound under reduced pressure.

2. The exhaust gas treatment method according to claim 1, wherein the exhaust gas is reacted with the reaction remover in the presence of oxygen.

3. The exhaust gas treatment method according to claim 1, wherein the exhaust gas is reacted with a reaction remover in the form of a viscous flow.

4. The exhaust gas treatment method according to claim 1, wherein at least a portion of the exhaust gas is put into the excited state by plasma and/or ultraviolet light.

5. The exhaust gas treatment method according to claim 1, wherein the exhaust gas contains xenon and/or krypton.

6. The exhaust gas treatment method according to claim 1, wherein the reaction remover contains calcium oxide and/or calcium hydroxide.

7. The exhaust gas treatment method according to claim 1, wherein the harmful gas component in a hydride or halide of an element oxide of which is a solid.

8. An exhaust gas treatment apparatus for treating exhaust gas containing at least one harmful gas component selected from the group consisting of organometallic gas, metal hydride gas and halide gas, comprising: a first exhaust pump for reducing the pressure of the exhaust gas, a second exhaust pump for reducing the pressure of the exhaust gas, an excitation unit arranged between the first exhaust pump and the second exhaust pump for putting the exhaust gas into an excited state, and a reaction removal unit containing a reaction remover for removing the harmful gas component by reacting with the harmful gas component present in exhaust gas discharged from the excitation unit.

9. The exhaust gas treatment apparatus according to claim 8, wherein an oxygen supply unit for supplying oxygen is arranged in the excitation unit.

10. The exhaust gas treatment apparatus according to claim 8, wherein the excitation unit is composed of a plasma device and/or an ultraviolet radiation device.

11. The exhaust gas treatment apparatus according to claim 8, wherein the reaction remover is composed of calcium oxide and/or calcium hydroxide.
